# EUROPEAN PATENT APPLICATION

(11) **EP 3 800 562 A1**
(43) Date of publication of application: **07.04.2021**
(21) Application number: 20199252.6
(22) Date of filing: 30.09.2020
(51) Int. Cl.: G06F 16/9032

(54) **METHODS, APPARATUS, AND COMPUTER PROGRAM PRODUCTS FOR FUZZY TERM SEARCHING**

(30) Priority: 01.10.2019 US 201916589931
(71) Applicant: HERE Global B.V., 5611 ZT Eindhoven (NL)
(72) Inventor: ROLF, Daniel, 13156 Berlin (DE); CAJIAS, Raul, 10245 Berlin (DE)
(74) Representative: Potter Clarkson

(57) **Abstract**

Methods described herein relate to answering fuzzy search queries. The method includes receiving one or more search indicator values based on one or more characters of a search query. Each search indicator value includes a digest of the one or more characters of the search query inputted into a minhash function with a salt value input. The method also includes comparing the one or more search indicator values with one or more sets of database indicator values. Each database indicator value in the one or more sets of database indicator values corresponds to a database value. The method further includes causing the transmission of at least one of the one or more database values based on the comparison of the one or more search indicator values with the one or more sets of database indicator values. Corresponding apparatuses, systems, and computer program products are also provided.

## Description

### TECHNOLOGICAL FIELD

Example embodiments of the present disclosure relate generally to fuzzy term searching, and more particularly, to using fuzzy searching for misspelled and/or incomplete search queries.

### BACKGROUND

Text searching is an important part of efficient computer usage including the identification of relevant resources. For example, search engines, including those supported by the internet, generally rely upon search terms to direct users to different websites or to identify resources that are responsive to the search terms. However, users often misspell search terms or do not provide enough information to perform an effective search for their desired target.

In order to efficiently identify the most relevant resources in response to a search query, the input from a user must be analyzed and, if necessary, adjusted to permit the query to be executed relative to the vast amount of information available without undue delay. Traditional databases do not allow for incomplete or inaccurate input or, if allowed, do not provide search results that are response to the intended query. While some databases provide for some adjustments to the search query to allow for some mistakes, these adjustments are often incomplete or otherwise still result in inefficient searches.

### BRIEF SUMMARY

Accordingly, methods, apparatuses, computer program products, and systems are provided for answering fuzzy search queries. In an example embodiment, the method includes receiving one or more search indicator values based on one or more characters of a search query. Each search indicator value includes a digest of the one or more characters of the search query inputted into a minhash function with a salt value input. The method also includes comparing the one or more search indicator values with one or more sets of database indicator values. Each database indicator value in the one or more sets of database indicator values corresponds to a database value. The method further includes causing the transmission of at least one of the one or more database values based on the comparison of the one or more search indicator values with the one or more sets of database indicator values.

In some embodiments, the method also includes generating a digest for at least one of the one or more database values based on the salt value input. In some embodiments, each database indicator value of the set of database indicator values includes a digest of the database value inputted into a minhash function with the same salt value input. In some embodiments, the digest of the one or more characters is based on the minhash function being performed on one or more hash windows of the one or more characters of the search query. In some embodiments, the comparing the set of search indicator values with one or more sets of database indicator values includes comparing search indicator values and database indicators values that were digests of the same minhash function.

In some embodiments, the method also includes receiving a request for the salt value input used with the minhash function and causing the transmission of the salt value input used with the minhash function. In some embodiments, the method also includes causing the transmission of an overfill message in an instance in which the number of database values selected based on the comparison of the one or more search indicator values with the one or more sets of database indicator values is greater than the number of database values requested.

In another example embodiment, an apparatus is provided for answering fuzzy search queries. The apparatus includes at least one processor and at least one non-transitory memory including computer program code instructions, the computer program code instructions configured to, when executed, cause the apparatus to receive one or more search indicator values based on one or more characters of a search query. Each search indicator value includes a digest of the one or more characters of a search query inputted into a minhash function with a salt value input. The computer program instructions are also configured to, when executed, cause the apparatus to compare the one or more search indicator values with one or more sets of database indicator values. Each database indicator value in the one or more sets of database indicator values corresponds to a database value. The computer program instructions are further configured to, when executed, cause the apparatus to cause the transmission of at least one of the one or more database values based on the comparison of the one or more search indicator values with the one or more sets of database indicator values.

In some embodiments, the computer program code instructions are further configured to, when executed, cause the apparatus to generate a digest for at least one of the one or more database values based on the salt value input. In some embodiments, each database indicator value of the set of database indicator values includes a digest of the database value inputted into a minhash function with the same salt value input. In some embodiments, the digest of the one or more characters is based on the minhash function being performed on one or more hash windows of the one or more characters of the search query.

In some embodiments, the comparing the set of search indicator values with one or more sets of database indicator values includes comparing search indicator values and database indicators values that were digests of the same minhash function. In some embodiments, the computer program code instructions are further configured to, when executed, cause the apparatus to receive a request for the salt value input used with the minhash function and cause the transmission of the salt value input used with the minhash function. In some embodiments, the computer program code instructions are further configured to, when executed, cause the apparatus to cause the transmission of an overfill message in an instance the number of database values selected based on the comparison of the one or more search indicator values with the one or more sets of database indicator values is higher than the number of database values requested.

In yet another example embodiment, a system is provided for answering fuzzy search queries. The system includes one or more servers, each server including at least one processor and at least one non-transitory memory including computer program code instructions, the computer program code instructions configured to, when executed, cause the server to receive a search indicator value based on one or more characters of a search query. The search indicator value includes a digest of the one or more characters of a search query inputted into a minhash function with a salt value input. The computer program code instructions are also configured to, when executed, cause the server to compare the search indicator value with a set of database indicator values. The database indicator value in the set of database indicator values corresponds to a database value. The computer program code instructions are further configured to, when executed, cause the server to cause the transmission of at least one of the one or more database values based on the comparison of the search indicator value with the set of database indicator values.

In some embodiments, each server also includes program code instructions to generate a digest for at least one of the one or more database values based on the salt value input. In some embodiments, each database indicator value of the set of database indicator values includes a digest of the database value inputted into a minhash function with the same salt value input. In some embodiments, the digest of the one or more characters is based on the minhash function being performed on one or more hash windows of the one or more characters of the search query. In some embodiments, each server further includes program code instructions to receive a request for the salt value input used with the minhash function and cause the transmission of the salt value input used with the minhash function. In some embodiments, the set of database value indicators of each server includes a set of digests of the database values inputted into a distinct minhash function with a different salt value input from the other servers.

In still another example embodiment, an apparatus is provided that includes means for answering fuzzy search queries. The apparatus includes means for receiving one or more search indicator values based on one or more characters of a search query. Each search indicator value includes a digest of the one or more characters of the search query inputted into a minhash function with a salt value input. The apparatus also includes means for comparing the one or more search indicator values with one or more sets of database indicator values. Each database indicator value in the one or more sets of database indicator values corresponds to a database value. The apparatus further includes means for causing the transmission of at least one of the one or more database values based on the comparison of the one or more search indicator values with the one or more sets of database indicator values.

In some embodiments, the apparatus also includes means for generating a digest for at least one of the one or more database values based on the salt value input. In some embodiments, each database indicator value of the set of database indicator values includes a digest of the database value inputted into a minhash function with the same salt value input. In some embodiments, the digest of the one or more characters is based on the minhash function being performed on one or more hash windows of the one or more characters of the search query. In some embodiments, the comparing the set of search indicator values with one or more sets of database indicator values includes comparing search indicator values and database indicators values that were digests of the same minhash function.

In some embodiments, the apparatus also includes means for receiving a request for the salt value input used with the minhash function and causing the transmission of the salt value input used with the minhash function. In some embodiments, the apparatus also includes means for causing the transmission of an overfill message in an instance in which the number of database values selected based on the comparison of the one or more search indicator values with the one or more sets of database indicator values is greater than the number of database values requested.
The following numbered paragraphs are also disclosed:
1. A method of answering fuzzy search queries, the method comprising:
   receiving one or more search indicator values based on one or more characters of a search query, wherein each search indicator value comprises a digest of the one or more characters of the search query inputted into a minhash function with a salt value input;
   comparing the one or more search indicator values with one or more sets of database indicator values, wherein each database indicator value in the one or more sets of database indicator values corresponds to a database value; and
   based on the comparison of the one or more search indicator values with the one or more sets of database indicator values, causing the transmission of at least one of the one or more database values.
2. The method of paragraph 1, further comprising generating a digest for at least one of the one or more database values based on the salt value input.
3. The method of paragraph 2, wherein each database indicator value of the set of database indicator values comprises a digest of the database value inputted into a minhash function with the same salt value input.
4. The method of paragraph 3, wherein the digest of the one or more characters is based on the minhash function being performed on one or more hash windows of the one or more characters of the search query.
5. The method of paragraph 4, wherein the comparing the set of search indicator values with one or more sets of database indicator values comprises comparing search indicator values and database indicators values that were digests of the same minhash function.
6. The method of paragraph 1, further comprising:
   receiving a request for the salt value input used with the minhash function; and
   causing the transmission of the salt value input used with the minhash function.
7. The method of paragraph 1, further comprising causing the transmission of an overfill message in an instance in which the number of database values selected based on the comparison of the one or more search indicator values with the one or more sets of database indicator values is greater than the number of database values requested.
8. An apparatus for answering fuzzy search queries, the apparatus comprising at least one processor and at least one non-transitory memory including computer program code instructions, the computer program code instructions configured to, when executed, cause the apparatus to:
   receive one or more search indicator values based on one or more characters of a search query, wherein each search indicator value comprises a digest of the one or more characters of a search query inputted into a minhash function with a salt value input;
   compare the one or more search indicator values with one or more sets of database indicator values, wherein each database indicator value in the one or more sets of database indicator values corresponds to a database value; and
   based on the comparison of the one or more search indicator values with the one or more sets of database indicator values, cause the transmission of at least one of the one or more database values.
9. The apparatus of paragraph 8, wherein the at least one memory and computer program code are further configured to, with the processor, cause the apparatus to generate a digest for at least one of the one or more database values based on the salt value input.
10. The apparatus of paragraph 9, wherein each database indicator value of the set of database indicator values comprises a digest of the database value inputted into a minhash function with the same salt value input.
11. The apparatus of paragraph 10, wherein the digest of the one or more characters is based on the minhash function being performed on one or more hash windows of the one or more characters of the search query.
12. The apparatus of paragraph 11, wherein the comparing the set of search indicator values with one or more sets of database indicator values comprises comparing search indicator values and database indicators values that were digests of the same minhash function.
13. The apparatus of paragraph 8, wherein the at least one memory and computer program code are further configured to, with the processor, cause the apparatus to:
   receive a request for the salt value input used with the minhash function; and
   cause the transmission of the salt value input used with the minhash function.
14. The apparatus of paragraph 8, wherein the at least one memory and computer program code are further configured to, with the processor, cause the apparatus to cause the transmission of an overfill message in an instance the number of database values selected based on the comparison of the one or more search indicator values with the one or more sets of database indicator values is higher than the number of database values requested.
15. A system for answering fuzzy search queries, the system comprising one or more servers, each server comprising at least one processor and at least one non-transitory memory including computer program code instructions, the computer program code instructions configured to, when executed, cause the server to:
   receive a search indicator value based on one or more characters of a search query, wherein the search indicator value comprises a digest of the one or more characters of a search query inputted into a minhash function with a salt value input;
   compare the search indicator value with a set of database indicator values, wherein the database indicator value in the set of database indicator values corresponds to a database value; and
   based on the comparison of the search indicator value with the set of database indicator values, cause the transmission of at least one of the one or more database values.
16. The system of paragraph 15, wherein each server further comprises program code instructions to generate a digest for at least one of the one or more database values based on the salt value input.
17. The system of paragraph 16, wherein each database indicator value of the set of database indicator values comprises a digest of the database value inputted into a minhash function with the same salt value input.
18. The system of paragraph 17, wherein the digest of the one or more characters is based on the minhash function being performed on one or more hash windows of the one or more characters of the search query.
19. The system of paragraph 15, wherein each server further comprises program code instructions to:
   receive a request for the salt value input used with the minhash function; and
   cause the transmission of the salt value input used with the minhash function.
20. The system of paragraph 15, wherein the set of database value indicators of each server comprises a set of digests of the database values inputted into a distinct minhash function with a different salt value input from the other servers.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings which are not necessarily drawn to scale, and wherein:
Figure 1 is a block diagram of an apparatus according to an example embodiment of the present disclosure;
Figure 2 is a flowchart illustrating the operations performed by an apparatus, such as the one shown in Figure 1, in accordance with an example embodiment of the present disclosure;
Figure 3 is a block diagram of an example system in accordance with an example embodiment of the present disclosure;
Figure 4 is a flowchart illustrating the operations of a client device in accordance with an example embodiment of the present disclosure; and
Figure 5 is a flowchart illustrating the operations of one or more index servers in accordance with an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the spirit and scope of embodiments of the present disclosure.

Various methods, apparatuses, and computer program products are provided in accordance with example embodiments of the present disclosure for improving fuzzy term searching, both online and offline. Conventional techniques of fuzzy term searching may allow for fuzzy searching, but are not specifically designed from a data structure perspective to facilitate and assist in fuzzy searching such that responsive results are obtained in an efficient manner, thereby providing improved performance and quality. Various embodiments of the present disclosure are designed for fault tolerant fuzzy text queries with some embodiments allowing for scaling across multiple servers and other embodiments configured to be performed locally within a device. In some embodiments, the operations described herein allow for parallel processing of search queries to be completed allowing for near instantaneous determinations.

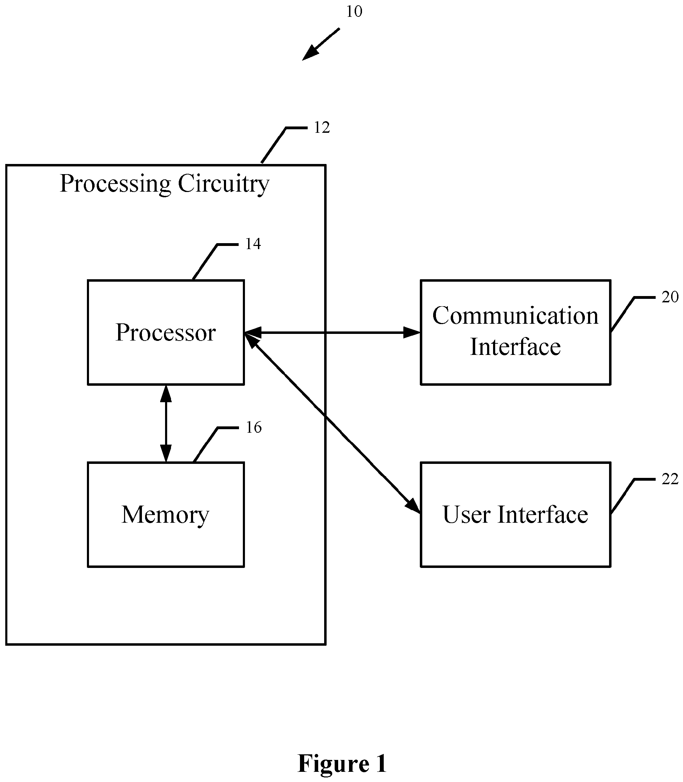

Figure 1 is a schematic diagram of an example apparatus configured for performing some of the operations described herein, particularly the determination of search terms based on one or more characters of a search query. The apparatus 10 may include, be associated with, or may otherwise be in communication with a processing circuitry 12, such as a processor 14 and a memory device 16; a communication interface 20, and a user interface 22. In some embodiments, the processor 14 (and/or co-processors or any other processing circuitry assisting or otherwise associated with the processor) may be in communication with the memory device 16 via a bus for passing information among components of the apparatus. The memory device 16 may be non-transitory and may include, for example, one or more volatile and/or non-volatile memories. In other words, for example, the memory device 16 may be an electronic storage device (for example, a computer readable storage medium) comprising gates configured to store data (for example, bits) that may be retrievable by a machine (for example, a computing device such as the processor 14). The memory device 16 may be configured to store information, data, content, applications, instructions, or the like for enabling the apparatus 10 to carry out various functions in accordance with an example embodiment of the present disclosure. For example, the memory device 16 could be configured to buffer input data for processing by the processor 14. Additionally or alternatively, the memory device 16 could be configured to store instructions for execution by the processor 14.

The processor 14 may be embodied in a number of different ways. For example, the processor 14 may be embodied as one or more of various hardware processing means such as a coprocessor, a microprocessor, a controller, a graphics processing unit (GPU), a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 14 may include one or more processing cores configured to perform independently. A multi-core processor may enable multiprocessing within a single physical package. Additionally or alternatively, the processor 14 may include one or more processors configured in tandem via the bus to enable independent execution of instructions, pipelining and/or multithreading.

In an example embodiment, the processor 14 may be configured to execute instructions stored in the memory device 16 or otherwise accessible to the processor. Alternatively or additionally, the processor 14 may be configured to execute hard coded functionality. As such, whether configured by hardware or software methods, or by a combination thereof, the processor 14 may represent an entity (for example, physically embodied in circuitry) capable of performing operations according to an embodiment of the present disclosure while configured accordingly. Thus, for example, when the processor 14 is embodied as an ASIC, FPGA or the like, the processor 14 may be specifically configured hardware for conducting the operations described herein. Alternatively, as another example, when the processor 14 is embodied as an executor of software instructions, the instructions may specifically configure the processor to perform the algorithms and/or operations described herein when the instructions are executed. However, in some cases, the processor 14 may be a processor of a specific device (for example, the computing device) configured to employ an embodiment of the present disclosure by further configuration of the processor by instructions for performing the algorithms and/or operations described herein. The processor may include, among other things, a clock, an arithmetic logic unit (ALU) and logic gates configured to support operation of the processor. In some embodiments, the processor 14 may be configured to use machine learning or other operations described herein.

The apparatus 10 of an example embodiment may also include a communication interface 20 that may be any means such as a device or circuitry embodied in either hardware or a combination of hardware and software that is configured to receive and/or transmit data from/to other electronic devices in communication with the apparatus, such as by near field communication (NFC). Additionally or alternatively, the communication interface 20 may be configured to communicate over Global System for Mobile Communications (GSM), such as but not limited to Long Term Evolution (LTE). In this regard, the communication interface 20 may include, for example, an antenna (or multiple antennas) and supporting hardware and/or software for enabling communications with a wireless communication network. Additionally or alternatively, the communication interface 20 may include the circuitry for interacting with the antenna(s) to cause transmission of signals via the antenna(s) or to handle receipt of signals received via the antenna(s). In some environments, the communication interface 20 may alternatively or also support wired communication and/or infrastructure wireless links. The communication interface 20 may be configured to communicate, through various methods described herein, with one or more client devices (e.g., mobile devices, computers, or the like), and/or the like.

The apparatus 10 of an example embodiment may also optionally include or otherwise be in communication with a user interface 22. The user interface 22 may include a touch screen display, a speaker, physical buttons, and/or other input/output mechanisms. In an example embodiment, the processor circuitry 12 may comprise user interface circuitry configured to control at least some functions of one or more input/output mechanisms. The processing circuitry and/or user interface circuitry comprising the processing circuitry may be configured to control one or more functions of one or more input/output mechanisms through computer program instructions (for example, software and/or firmware) stored on a memory accessible to the processor (for example, memory device 16, and/or the like).

In some embodiments, the user interface 22 may be in communication with the processing circuitry 12 to receive an indication of a user input and/or to cause presentation of the video output generated by execution of computer software. As such, the user interface may include, for example, a keyboard, a mouse, a joystick, a display, a touch screen(s), touch areas, soft keys, a microphone, a speaker, or other input/output mechanisms. Alternatively or additionally, the processing circuitry 12 may comprise user interface circuitry configured to control at least some functions of one or more user interface elements such as, for example, a speaker, ringer, microphone, display, and/or the like. The processing circuitry and/or user interface circuitry comprising the processing circuitry may be configured to control one or more functions of one or more user interface elements through computer program instructions (e.g., software and/or firmware) stored on a memory accessible to the processor (e.g., memory device 16, and/or the like). The user interface may include one or more user equipment.

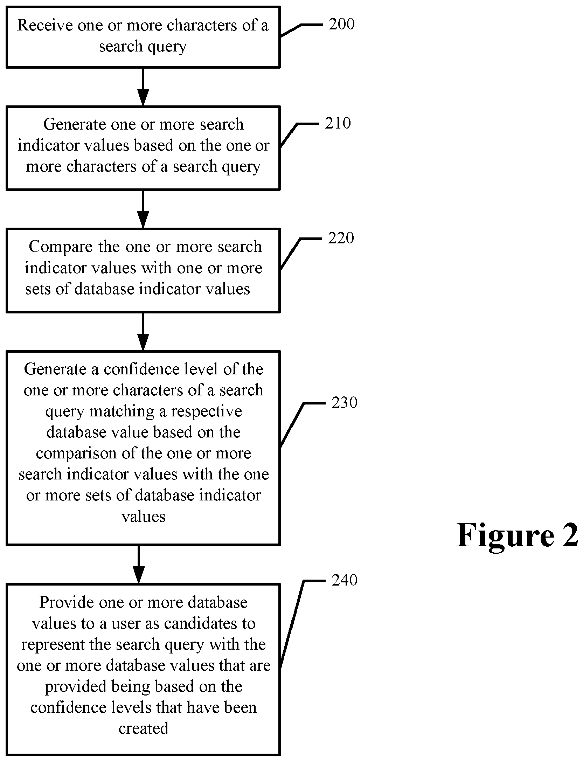

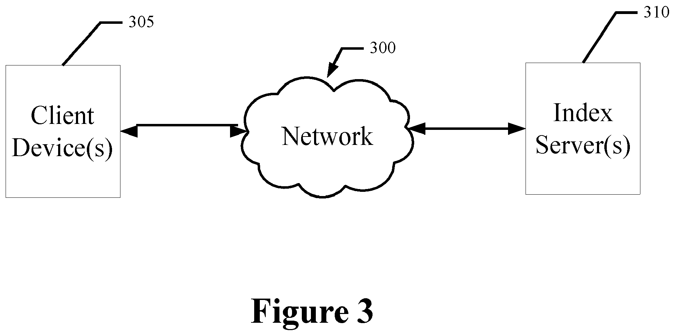

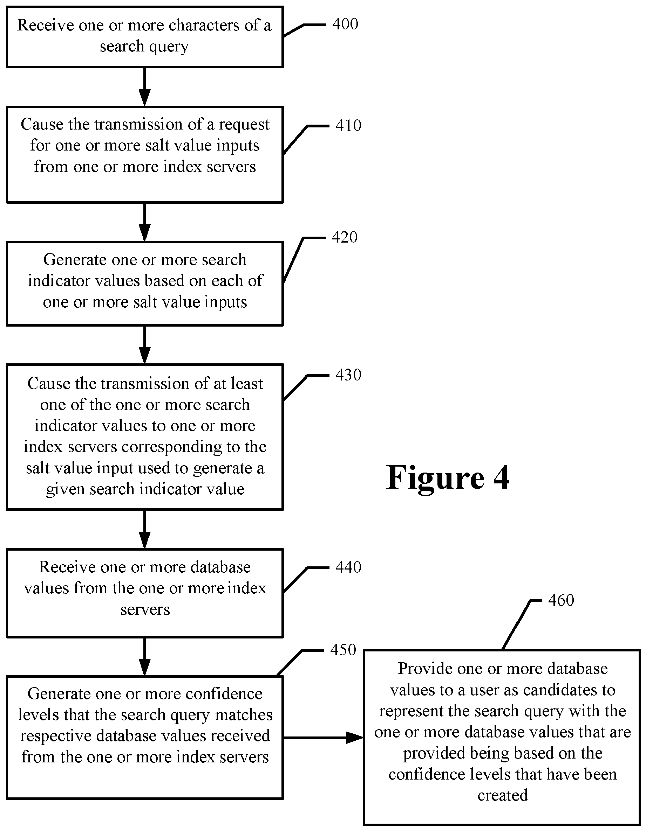

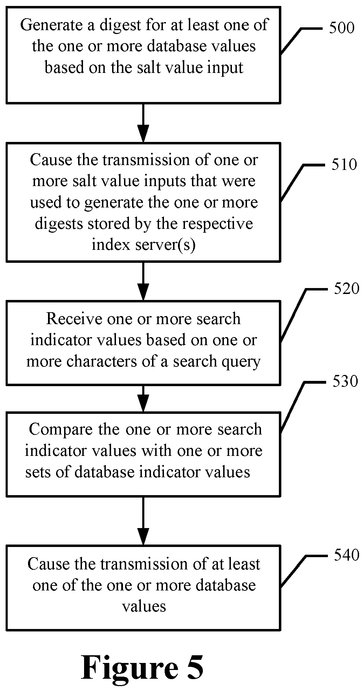

Figure 2 illustrates a flowchart of the operations of an apparatus, such as the apparatus 10 shown in Figure 1, for fuzzy term searching. In various embodiments, the operations described herein may be completed offline by one or more devices. For example, the apparatus 10 may be configured to complete some or all of the operations of Figure 2 without communicating with other devices and/or servers. In some embodiments, the operations may be performed online, such as discussed in reference to Figures 3-5. Various operations discussed in reference to Figures 4 and 5 may also be performed by the apparatus 10, unless otherwise stated.

Referring now to Block 200 of Figure 2, the apparatus 10 includes means, such as the processing circuitry 12, the communication interface 20, the user interface 22, or the like, for receiving one or more characters of a search query. In some embodiments, the one or more characters of the search query may be provided to the apparatus 10 by typing on a physical or virtual keyboard, drawing on a tablet, speaking a voice command, and/or the like. In some embodiments, the reception of one or more characters of the search query may be simultaneous, or near simultaneous, to the time that the characters are inputted. For example, a user may input one or more characters of a search query into a keyboard and the processing circuitry 12 may receive each character as the character is typed. Additionally or alternatively, the processing circuitry 12 may receive two or more characters of a search query at the same time. For example, the processing circuitry 12 may not receive the characters until a user hits enter on a keyboard. As discussed below, the reception of one or more characters of a search query may be used to determine, such as by the processing circuitry 12, one or more potential search queries that match the one or more characters. For example, the one or more characters may be used to generate autosuggestions for completing the search queries. In some embodiments, the one or more characters may be used to correct misspelling as discussed herein.

Referring now to Block 210 of Figure 2, the apparatus 10 includes means, such as the processing circuitry 12, the processor 14, or the like, for generating one or more search indicator values based on the one or more characters of a search query. In some embodiments, each search indicator value of the one or more search indicator values is a digest of the one or more characters of a search query inputted into an individual digest generation function, such as one or more minhash functions, configured to provide a representation of the search query. In various embodiments, the one or more minhash functions may use one or more salt values in conjunction with the one or more characters of the search query to produce a search indicator value. In various embodiments, the one or more salt values used in the minhash function may be known as a salt value input. In various embodiments, the number of salt values that make up the salt value input into the minhash function may be based on the type of minhash function used. In various embodiments, the salt value input may be inputted with the one or more characters of the search query into the minhash function of each index server and/or database. In various embodiments, the salt value input used in a given minhash function may affect the hash value of the characters within the function (e.g., the digest of a minhash function for a search query may be different based on the salt value input for said minhash function). In some embodiments, the apparatus 10 may have a list defining one or more different minhash functions in place of using one or more salt value inputs.

As discussed below in reference to Block 220, the salt value input used to create a search indicator value may be the same as one used to create a set of database indicator values stored in the memory 16. In some embodiments, a plurality of search indicator values may be generated based on a plurality of salt value inputs. In some embodiments, each salt value may be a pseudo-random value. In some embodiments, the salt value may not be related to the one or more characters of the search query. For example, each of the salt values may be an internet protocol (IP) address or a port number of the apparatus 10 or the like. In some embodiments, the salt value(s) may be unique to the index server and/or database. For example, each index server and/or database may have a distinct salt value input (e.g., one or more salt values). In various embodiments, the one or more salt values may be fed along with the character into a minhash function, such that the digest of the same query may be different in an instance the salt value inputs are different.

In some embodiments, the search indicator values may be based on a character window size used by the minhash function, along with the salt value input. In an example embodiment, the minhash function may be configured to determine a respective value, such as the minimum value, from among the characters in the character window and the salt value inputs. In order to permit the determination of a minimum value, the characters, such as the alphabetic characters, that may comprise a search query may each be assigned a value, such as in accordance with a predefined translation table. For example, an A may be worth 7, a B worth 15, a C worth 2, and so on.

As described below, a plurality of minhash functions may be defined to evaluate the same search query with each minhash function utilizing a different salt value input. In some embodiments, the character window size may be consistent through all minhash functions performed by the apparatus 10. In such an embodiment, each minhash function may have a distinct salt value input, but the same window size. For example, the window size may be 3. In various embodiments, the distinct salt value inputs may randomize the digests of a minhash function such that different minhash functions (e.g., each index server having a different salt value input) may be effective in identifying different misspellings. In some embodiments, the character window size may be based on the tolerance to errors of an input desired. For example, the size of the window may be based on how often a typographical error may be expected to occur (e.g., in an instance a typographical error happens every 3-5 characters, then the character window may be 3-5 to account for such errors). In various embodiments, the digest of a minhash function may be calculated based on the number of characters defined by the character window (e.g., three characters) along with the salt value input (e.g., two salt values). In some embodiments, the window size may be different for different minhash functions, thereby likely resulting in different search indicator values. For example, even with the same salt value input, a different character window size may result in a minhash function generating a different digest in the form of a search indicator value. In an example embodiment, the different sets of database indicator values generated by minhash functions using different salt value inputs may be stored in the database, such as in different indexes maintained by the database, one of which stores the database indicator values generated by the minhash function using a respective salt value input. In various embodiments, the salt value may be predetermined (e.g., determined once for each server). In some embodiments, the salt values may not be modified after being determined.

By way of example, in an instance there are two instances of a minhash function with different salt value inputs, e.g., (0, 0) and (1, 0), and window size of 3, a database value (e.g., "INVALIDENSTRASSE BERLIN") may be processed by each instance of the minhash function and result in two different database indicator values (e.g., one database indicator value may be "IAIESAEIN" for salt values of (0, 0) and the other database indicator value may be "NLDNRS BLN" for salt values of (1, 0)). In such an example, in an instance the search query is spelled the same as the database value (e.g., "INVALIDENSTRASSE BERLIN"), then the resultant search indicator values generated by the same instances of the minhash function will be the same as for the database value (e.g., one search indicator value may be "IAIESAEIN" for salt values of (0, 0) and the other search indicator value may be "NLDNRS BLN" for salt values of (1, 0)). Such an example may produce a confidence level of 1. In an instance the search query is not spelled the same as the database value due to, for example, a misspelling (e.g., "INVALIDNESTRASSE BERLIN"), then one or more of the resultant search indicator values generated by the same instances of the minhash function may not match the database indicator values. For example, one search indicator value (e.g., "IAIESAEIN" for salt values of (1, 0)) may be the same as the corresponding database value indictor, while the other search indicator value (e.g., "NLDNRS BLN" for salt values of (1, 0)) may be different. Such an example may produce a confidence level of .50. Alternatively, a different misspelling (e.g., "INVLAIDENSTRASSE BERLIN") may result in different resultant search indicator values that match the opposite database indicator value as the previous misspelling (e.g., "NLDNRS BLN" may match the database indicator value "NLDNRS BLN", but "IVAESAEIN" may not match the other database indicator value "IAIESAEIN"). In such an example, the confidence level may also be .50. In an example embodiment with more instances of the minhash functions having distinct salt value input, the confidence level may be more precise.

Referring now to Block 220 of Figure 2, the apparatus 10 includes means, such as the processing circuitry 12, the processor 14, or the like, for comparing the one or more search indicator values with one or more sets of database indicator values. In some embodiments, each database indicator value of the set of database indicator values may be a digest of an individual database value inputted into a digest generation function, such as the same minhash functions with the same salt value inputs as utilized in conjunction with the generation of the search indicator value. For example, a database may include a set of database values. The database values may be typically searched words and/or phrases. For example, in an instance in which the database is associated with a navigation application that supports a search function to permit a user to search for a particular location, such as an address or a point of interest (POI), the database may include the names of the various streets, the POIs and other geographic features. In some embodiments, the number of terms and/or phrases included in a set of database values may be based on the use case of the apparatus 10. Each database value may be inputted into a minhash function along with the same salt value inputs and utilizing the same character window size as utilized in conjunction with the generation of the search indicator value to create the set of database indicator values.

In some embodiments, the one or more sets of database indicator values may be stored by the apparatus 10, such as in the memory 16. In some embodiments, the apparatus 10, such as the processing circuitry 12, may be configured to generate one or more of the database indicator values. In some embodiments, the generation of the database indicator values may be performed before entry of the search query, while in other embodiments, the database indicator values may be generated in response to entry of the search query. While the database indicator values may be generated by the apparatus 10 as described above, in some embodiments, the database indicator values may, instead, be generated externally to the apparatus 10, such as by the index server(s) 310 shown in Figure 3. In this embodiment, the apparatus 10, such as in the memory device 16, receives and stores the database indicator values, such as from the index server(s) 310, for future use, whether connected to the network 300 as shown in Figure 3, or offline, at the time of use.

In some embodiments, each search indicator value may be compared by the processing circuitry 12 to a set of database indicator values that also were digests generated by the minhash function with the same salt value inputs. In some embodiments, the comparison may result in one or more matches of a search indicator value with a database indicator value from the set of database indicator values, such as in an instance in which the search indicator value and the database indicator value are the same. In some embodiments, the matching of the search indicator value with a database indicator value indicates that the search indicator value may be the same as a portion, but not all, of the database indicator value. For example, in an instance the one or more characters of a search query (e.g., "food near") matches less than all the word of a multiword database value (e.g., "food near me"), the search indicator value may match a portion of the database value. In various embodiments, the search indicator value may be matched with more than one of the database indicator values within a set of database indicator values.

In an example embodiment, in an instance in which an entire search query is entered with the correct spelling, the comparison may only match the search indicator value with the database indicator value corresponding to the database value for the correctly spelled search query. Alternatively, in an instance the search query was incomplete and/or misspelled, the search indicator value may be matched with no database indicator values, the correct database indicator value corresponding to the search query if the search query were complete and spelled correctly, the incorrect database indicator value corresponding to a search query different than the complete and correctly spelled version of the search query, or multiple database indicator values, correct and/or otherwise. As discussed above in reference to an example, the more search indicator values that match with a database indicator value corresponding with the same database value, the higher the likelihood the database value is the intended search query. For example, as discussed above, in an instance in which the search query is spelled incorrectly by only a few letters (e.g., reversing two letters), then the search indicator values may match with some, but not all, of the database indicator values corresponding to the database value (e.g., intended search query). In various embodiments, the number of minhash functions with distinct salt value inputs that are used may be based on desired level of precision, available computing power, desired computing power, and/or the like.

Referring now to Block 230 of Figure 2, the apparatus 10 of an example embodiment includes means, such as the processing circuitry 12, the memory device 16, or the like, for generating a confidence level of the one or more characters of a search query matching a respective database value based on the comparison of the one or more search indicator values with the one or more sets of database indicator values. In an example embodiment, the confidence level may indicate the likelihood of a database value (e.g., search term and/or phrase) matching the intended search query of a user.

In an example embodiment, the confidence level of the one or more characters of a search query corresponding to a database value may be from 0 to 1, with 0 representing no confidence in the match and 1 representing complete confidence in the match. In various embodiments, the accuracy of the confidence level may be based on the number of individual sets of database indicator values used to determine the confidence level with the analysis of more sets of database indicator values resulting in increased accuracy in the confidence level and, conversely, the analysis of fewer sets of database indicator values resulting in decreased accuracy in the confidence level. In an example embodiment, based on the comparison of a search indicator value with a set of database indicator values, the apparatus 10 includes means, such as the processing circuitry 12, for determining whether one or more database indicator values match a portion or all of the search indicator value. In some embodiments, the confidence level may be based on the number of times a database value is matched with a search indicator value divided by the number of sets of database value indicators used in the determination.

For example, in an instance in which there are three sets of database value indicators, if the one or more characters of the search query represent the entire, correctly spelled intended search query (e.g., "food near me"), then the comparison with three sets of database indicator values may result in a database indicator value from each of the three sets matching with the corresponding search value indicator and resulting in a confidence level of 1. However, in an example where the search query was incomplete and/or misspelled (e.g., "food near"), then database indicator values from less than all (e.g., two out of three sets) of the sets of database indicator values may match with the corresponding search indicator value and result in a lower confidence level (e.g., a confidence level of .667 for matching with a database value in two out of three sets of database indicator values).

Additionally, other similar search queries may also result in matches with multiple database values and therefore a confidence level may be created by the processing circuitry 12 for each database value matched. For example, in the instance the search query is incomplete (e.g., "food near"), the comparison of the search indicator value may also result in matches with database indicator values representative of other search queries (e.g., "food near the mall"). In some embodiments, the apparatus 10, such as the processing circuitry 12, may generate a confidence level for a plurality of database values that match the search query. The apparatus 10, such as the processing circuitry 12, may be configured to determine a confidence level for each different match, such as for each database value that is determined to potentially match a search query. In some embodiments, the multiple confidence levels may be ranked and/or compared by the processing circuitry 12 to determine the most likely candidate(s) for the intended search query.

Referring now to Block 240 of Figure 2, the apparatus 10 of an example embodiment may include means, such as the processing circuitry 12, the user interface 22 or the like, for providing one or more database values to a user as candidates to represent the search query with the database value(s) that are provided being based on the confidence levels that have been created, such as by providing the database values with the greatest confidence levels. In some embodiments, the one or more database values may be provided to the user on a screen (e.g., on a map), via a voice output, and/or the like. In some embodiments, the apparatus 10, such as the processing circuitry 12, may provide more than one candidate for the search query to a user interface 22. For example, the apparatus 10 may provide the database values with the top five confidence levels to the user interface 22. Alternatively, the apparatus 10 may provide any database value that satisfy a threshold confidence level, such as by being above a certain threshold confidence level. For example, any database value with a confidence level greater than 0.5 may be presented on the user interface as a candidate to represent the search query.

In various embodiments, based on the confidence level of one or more database values, the apparatus 10 may include means, such as the processing circuitry 12, for conducting a search (e.g., such as a search engine). In some embodiments, the apparatus may receive, such as by the user interface 22, a selection of one or more database values based on the one or more database values presented via the user interface 22. For example, the apparatus 10, such as the processing circuitry 12, may receive a selection of one or more of the database values with the top five confidence levels presented to the user interface 22, and subsequently search for the presence of the database values in a repository, such as within a database, within the online resources, etc. In some embodiments, the apparatus 10, such as the processing circuitry 12, may provide the user interface with at least one of a suggested correction in spelling, a corrected search query, or a suggested completion to the search query and may, in turn, conduct the search based on user input accepting or rejecting the suggested correction in spelling, the corrected search query, or the suggested completion to the search query.

In some embodiments, the apparatus 10, such as the processing circuitry 12, may use the confidence level of one or more database values to provide a suggested correction and/or a suggestion for an auto fill. For example, in an instance a user misspells the intended search query, the apparatus 10, such as the processing circuitry 12, may provide a suggestion to correct the search to the intended search query based on the matching database value(s) with the greatest confidence levels. In some embodiments, the operations may be completed during or in conjunction with the input of the search query and the confidence level of the database value may be used to predict the intended search query.

Although the foregoing fuzzy search process may be conducted by the apparatus 10 without communication with a network or other network resources, such as in an offline manner, the apparatus 10 of an example embodiment may be employed in a network configuration utilizing various network resources, such as in conjunction with a client server architecture. In this regard, Figure 3 illustrates a system configured for fuzzy searching in accordance with an example embodiment using a network with one or more servers, e.g., index servers. In some embodiments, one or more client devices 305 may be in communication with the network 300. Although client devices and servers, e.g., index servers, are referenced in this example embodiment, other types of computing devices may instead be utilized, such as in conjunction with other types of computer architectures, such that reference to a client device and/or a server is provided by way of example, but not of limitation. In some embodiments, the client device 305 may include some or all of the components of the apparatus 10 shown in Figure 1. For example, the client device 305 may include a processing circuitry 12, a communication interface 20, and/or a user interface 22. In some embodiments, the index server 310 may also include processing circuitry 12, memory devices 16, communication interfaces 20, or the like. The network 300 may be any of various wireless communication networks, such as cellular networks, Wi-Fi, internet, local area networks, or the like.

In some embodiments, the apparatus 10 includes means, such as the processing circuitry 12, the processor 14, or the like, for monitoring the databases during operation. In some embodiments, in an instance the search indicator value does not match any database indicator values in the database, the search indicator value and corresponding one or more characters of a search query may be added to the database. In some embodiments, the apparatus 10 includes means, such as the processing circuitry 12, the processor 14, or the like, for removing database values and corresponding database indicator values from one or more databases. For example, in an instance a database value may be removed from a database, the apparatus 10 may input the database value into the corresponding minhash function for each set of database indicator values. In some embodiments, for offline operations as discussed in reference to Figure 3, the operations described for monitoring the databases and/or removing database values may be repeated for each set of database indicator values.

Figures 4 and 5 are flowcharts illustrating the operations, at least some of which may be performed by the client device (Figure 4) and the index server(s) (Figure 5) of various embodiments. Unless explicitly stated, some of the operations discussed in reference to Figures 4 and 5 may be completed by other components of the system shown in Figure 3. For example, the processing circuitry 12 of client device 305 may complete one or more operations represented by Figure 5. Various components discussed in Figure 1 relating to the apparatus 10 may also be present in part, or as a whole, in the system shown in Figure 3. Additionally, a plurality of components shown in Figure 1 may also be present in the system. For example, both client device(s) 305 and index server(s) may have a combination of a processing circuitry 12, a memory device 16, and a communication interface 20.

Referring now to Figure 4, the flowchart of the operations of a client device 305 which may embody the apparatus 10 shown in Figure 1, is provided for fuzzy term searching. In various embodiments shown in Figure 4, the client device 305 may include means, such as the communication interface 20, to interact with a network 300 and one or more index servers 310 as shown in Figure 3. In some embodiments, the operations shown in Figure 4 may be completed in tandem with the operations of Figure 5 discussed below.

Referring now to Block 400 of Figure 4, the client device 305 includes means, such as the processing circuitry 12, the processor 14, the user interface 22, or the like, for receiving one or more characters of a search query. In various embodiments, the reception of one or more characters of the search query may be the same as the reception discussed in reference to Block 200 of Figure 2 relating to apparatus 10. For example, the client device 305 may have, or be in communication with, a user interface 22 configured to allow a user to input the one or more characters of the search query. For example, the user may input the one or more characters of the search query by typing on a physical or virtual keyboard, drawing on a tablet, speaking a voice command, and/or the like.

Referring now to Block 410 of Figure 4, the client device 305 includes means, such as the processing circuitry 12, the processor 14, or the like, for causing the transmission of a request for one or more salt value inputs from one or more index servers. In various embodiments, the one or more index servers 310 may each have one or more sets of database indicator values with each set being based on a set of database values being inputted into a minhash function with a distinct salt value input. In some embodiments, the number of sets of database indicator values used may affect the accuracy of the confidence level discussed below, such as in an embodiment in which a direct relationship is established between the number of sets of database value indicators and the level of accuracy. For example, 32 sets of database value indicators will result in a higher level of accuracy in the confidence level than 8 sets of database value indicators. In some embodiments, each index server 310 may have one set of database indicator values that is different than the set of database indicator values maintained by the other index servers. In various embodiments, the number of index servers may affect the likelihood of a mistyped search query being matched with the intended search query. For example, the more index servers, the more likely an incorrectly typed search query may be matched with the intended search query. In some embodiments, the number of index servers may be based on balancing the speed of searching with the accuracy of the fuzzy search features discussed herein. For example, more index servers may allow for an increase in catching mistyped search queries but also increase the time to complete the operations described herein. In some embodiments, the number of index servers may be based on a review of previous search logs (e.g., the number of index servers used may be based on the average number of misspellings of one or more search queries over a set period of time).

In some embodiments, the client device 305, such as the processing device 12, the communication interface 20 or the like, may cause the transmission of the request for one or more salt value inputs to one or more of the index server(s) 310, through the network 300. In some embodiments, the client device 305 may request the salt value input from one or more of the index server(s) 310 in advance of the operations discussed herein (e.g., during an initial setup period). Additionally or alternatively, the client device 305 may request the salt value inputs from one or more of the index server(s) 310 after receiving one or more characters of a search query. In some embodiments, the client device 305 may receive one or more salt value inputs without requesting the salt value input. For example, the index server(s) 310 may transmit the corresponding salt value inputs when connected to the network 300 and subsequently to a client device 305 when connected to network 300. In some embodiments, the index server(s) 310 may provide salt value inputs to connected client devices 305 at regular intervals. The salt value input(s) provided by an index server generally represent the salt value input(s) utilized to generate the set(s) of database indicator values stored by the index server. In various embodiments, the client device 305 may receive a definition of a minhash function that corresponds to the set of database indicator values held by a given index server 310 (e.g., in place of a salt value input).

Referring now to Block 420 of Figure 4, the client device 305 includes means, such as the processing circuitry 12, the processor 14, or the like, for generating one or more search indicator values based on each of one or more salt value inputs. In various embodiments, the generation of the one or more search indicator values may be the same as discussed in reference to Block 210 of Figure 2 relating to apparatus 10. For example, the client device 305, such as by the processing circuitry 12, may generate a search indicator value by inputting the one or more characters of a search query into a minhash function with one of the salt value inputs discussed in Block 410. The character window size may be fixed or may differ between the sets of database indicator values.

Referring now to Block 430 of Figure 4, the client device 305 includes means, such as the processing circuitry 12, the processor 14, or the like, for causing the transmission of at least one of the one or more search indicator values to the index server corresponding to the salt value input used to generate a given search indicator value. In some embodiments, the client device 305, such as by the processing circuitry 12, the communication interface 20 or the like, may cause the transmission of the search indicator value, the one or more characters that comprise the search query, and/or the desired maximum number of matched database values to each index server 310. For example, the client device 305 may provide one or more of the index servers 310 with the search indicator value corresponding to each set of database indicator values possessed by a given index server 310 (based on a correspondence between the salt value input used to generate the search indicator value and the set of database indicator value), along with a request for a maximum of five matches be returned. In some embodiments, the one or more characters may be used by the index servers 310 to update the set of database indicator values with the inputted value. In an example embodiment, an index server 310 may update the set of database indicator values with a new term or phrase for a search query that does not match any database value in the set of database values. For example, in an instance the search query includes a new roadway (e.g., First Avenue), the index server 310, upon returning no database value corresponding to the search indicator value may add the search query (e.g., First Avenue) and associated search indicator value as a database value.

Referring now to Block 440 of Figure 4, the client device 305 includes means, such as the processing circuitry 12, the processor 14, or the like, for receiving one or more database values from the one or more index servers. In various embodiments, the one or more database values received are based on a comparison of the search indicator value that was provided with the corresponding set of database indicator values maintained by a respective index server. As discussed above, one or more client devices 305 may request only a certain number of database values be returned from a given index server. The database values received by the client device 305 may correspond to the most likely matches of the given search indicator value with the set of database indicator values. In some embodiments, where there are more matches than the requested number, the client device 305 may also receive an overfill message indicating that more database values matched the search indicator value than requested.

Referring now to Block 450 of Figure 4, the client device 305 includes means, such as the processing circuitry 12, the processor 14, or the like, for generating one or more confidence levels that the search query matches respective database values received from the one or more index servers. In various embodiments, the generation of the one or more confidence levels may be the same as discussed in Block 230 of Figure 2 relating to apparatus 10. For example, the one or more database values may be provided to the user on a screen (e.g., on a map), via a voice output, and/or the like.

Referring now to Block 460 of Figure 4, the client device 305 includes means, such as the processing circuitry 12, the processor 14, or the like, for providing one or more database values to a user as candidates to represent the search query with the one or more database values that are provided being based on the confidence levels that have been created. In various embodiments, the provision of the one or more database values may be the same as discussed in Block 240 of Figure 2 relating to apparatus 10. For example, the one or more database values may be provided to the user on a screen (e.g., on a map), via a voice output, and/or the like.

Referring now to Figure 5, the flowchart of the operations of one or more index servers, such as the index server(s) 310 shown in Figure 5, is provided for fuzzy term searching. In various embodiments, the index server(s) 310 may be configured with processing circuitry, such as the processing circuitry 12 discussed in reference to apparatus 10 of Figure 1. In some embodiments, the operations shown in Figure 5 may be completed in tandem with the operations of Figure 4 discussed below. As such, some operations may also be omitted or completed by a part of the system not defined herein. For example, one or more of the operations referenced to be completed by the index server 310 may, instead, be completed by a client device 305, and vice versa.

Referring now to Block 500 of Figure 5, the index server(s) 310 includes means, such as the processor 14, for generating a digest for at least one of the one or more database values based on the salt value input. In various embodiments, the digest of the database value may be a database indicator value. In some embodiments, the generation of the digest of at least one of the one or more database values may be completed in the same way the search indicator values are generated as discussed throughout, such as in Figures 2 and 4, using a minhash function with a specific salt value input and character window size. In some embodiments, the digests that are created from different database values (such as may be representative of different misspellings of a search query) using the same salt value input and character window size may be combined to form a set of database indicator values. In some embodiments, an index server 310 may store one or more sets of database indicator values along with an indication of the salt value input and character window size. In some embodiments, one or more sets of database indicator values may be generated prior to receipt and analysis of a search query. In other embodiments, one or more sets of database indicator values may be generated in response to receipt of a search query, such as when the search indicator value is received by the index server 310. In some embodiments, the sets of database indicator values may be generated remote from the index server(s) 310, such as by another processor connected to the network 300. In such an embodiment, the sets of database indicator values may be received and stored by the index server(s) 310, such as in a memory device 16.

Referring now to Block 510 of Figure 5, the index server(s) 310 includes means, such as the processing circuitry 12, for causing the transmission of one or more salt value inputs that were used to generate the one or more digests stored by the respective index server(s). In some embodiments, the transmission may be in response to request from one or more client devices 305 as discussed in reference to Block 410 of Figure 4. In other embodiments, the transmission may not be prompted by a request by a client device 305. In some embodiments, the transmission may be made to one or more client devices 305 connected to the network 300 based on the request from less than all of the client devices 305 connected to the network 300. In various embodiments, the index server(s) 310 may cause the transmission of a definition of the minhash function that corresponds to the set of database indicator values held by the index server(s) 310 (e.g., in place of a salt value input).

Referring now to Block 520 of Figure 5, the index server(s) 310 includes means, such as the processing circuitry 12, for receiving one or more search indicator values based on one or more characters of a search query. In some embodiments, the reception of the one or more search indicator values may be the result of the transmission discussed in reference to Block 430 of Figure 4. In some embodiments, the client device 310 may send one or more search indicator values based on the salt value inputs received from a given index server(s) 310. For example, the client device 305 may cause the transmission of a search indicator value that was a digest of a minhash function with a specific salt value input only to the index server 310 that has the set of database indicator values that is the digest of minhash function with the same specific salt value input. In some embodiments, the client device 305 may not send a search indicator value to every index server 310. For example, the client device 305 may only want to compare the one or more search indicator values with a certain number of sets of database indicator values.

Referring now to Block 530 of Figure 5, the index server(s) 310 includes means, such as the processing circuitry 12, for comparing the one or more search indicator values with one or more sets of database indicator values. In various embodiments, the comparison may be the same as discussed in Block 220 of Figure 2 relating to apparatus 10. In some embodiments, each database indicator value of an index server (e.g., each index server 310 may have a set of database indicator values) may be a digest of an individual database value inputted into a digest generation function, such as the same minhash functions with the same salt value inputs as utilized in conjunction with the generation of the search indicator value. For example, an index server may include a singular set of database values. The database values may be typically searched words and/or phrases. For example, in an instance in which the database is associated with a navigation application that supports a search function to permit a user to search for a particular location, such as an address or a point of interest (POI), the database may include the names of the various streets, the POIs and other geographic features. In some embodiments, the number of terms and/or phrases included in an index server (e.g., set of database values) may be based on the use case of the operations. Each database value may be inputted into a minhash function along with the same salt value input and using the same character window size as used in conjunction with the generation of the search indicator value to create the set of database indicator values in each index server 310.

In some embodiments, each of the one or more sets of database indicator values may be stored on an individual index server 310. In some embodiments, each index server 310 may be configured to generate one or more of the database indicator values. In some embodiments, the generation of the database indicator values may be performed before entry of the search query, while in other embodiments, the database indicator values may be generated in response to entry of the search query

Referring now to Block 540 of Figure 5, the index server(s) 310 includes means, such as a processor, for causing the transmission of at least one of the one or more database values. In some embodiments, the transmission may be provided to the client device 305 that provided the given search indicator value. In some embodiments, the transmission of the at least one database value may be based on the comparison referenced in Block 530 of Figure 5. In some embodiments, the database values transmitted are the database values that correspond to the database indicator values that matched the one or more search indicator values. In some embodiments, in an instance there are more matches than the requested number of matches, the index server(s) 310 may provide an overfill message indicating that more database values matched the search indicator value than requested.

In various embodiments, at least some example embodiments of the present disclosure allow for online and/or offline fuzzy term searching. In some embodiments discussed herein, the methods, apparatuses, and computer program products allow for efficient fuzzy searching with minimal time delays allowing for near-real time updates, thereby providing improved performance and quality. Various embodiments of the present disclosure are designed for fault tolerant fuzzy text queries with some embodiments allowing for scaling across multiple servers and other embodiments configured to be performed locally within a device. In some embodiments, the operations described herein allow for parallel processing of search queries to be completed allowing for near instantaneous determinations.

Figures 2, 4, and 5 illustrate flowcharts of various apparatuses, methods, and computer program products according to example embodiments of the present disclosure. It will be understood that each block of the flowchart, and combinations of blocks in the flowchart, may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 16 of an apparatus 10 employing an embodiment of the present disclosure and executed by a processing circuitry 12 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, some of which have been described above. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of answering fuzzy search queries, the method comprising:
receiving one or more search indicator values based on one or more characters of a search query, wherein each search indicator value comprises a digest of the one or more characters of the search query inputted into a minhash function with a salt value input;
comparing the one or more search indicator values with one or more sets of database indicator values, wherein each database indicator value in the one or more sets of database indicator values corresponds to a database value; and
based on the comparison of the one or more search indicator values with the one or more sets of database indicator values, causing the transmission of at least one of the one or more database values.

2. The method of Claim 1, further comprising generating a digest for at least one of the one or more database values based on the salt value input.

3. The method of Claim 2, wherein each database indicator value of the set of database indicator values comprises a digest of the database value inputted into a minhash function with the same salt value input.

4. The method of Claim 3, wherein the digest of the one or more characters is based on the minhash function being performed on one or more hash windows of the one or more characters of the search query.

5. The method of Claim 4, wherein the comparing the set of search indicator values with one or more sets of database indicator values comprises comparing search indicator values and database indicators values that were digests of the same minhash function.

6. The method of Claim 1, further comprising:
receiving a request for the salt value input used with the minhash function; and
causing the transmission of the salt value input used with the minhash function.

7. The method of Claim 1, further comprising causing the transmission of an overfill message in an instance in which the number of database values selected based on the comparison of the one or more search indicator values with the one or more sets of database indicator values is greater than the number of database values requested.

8. An apparatus for answering fuzzy search queries, the apparatus comprising at least one processor and at least one non-transitory memory including computer program code instructions, the computer program code instructions configured to, when executed, cause the apparatus to:
receive one or more search indicator values based on one or more characters of a search query, wherein each search indicator value comprises a digest of the one or more characters of a search query inputted into a minhash function with a salt value input;
compare the one or more search indicator values with one or more sets of database indicator values, wherein each database indicator value in the one or more sets of database indicator values corresponds to a database value; and
based on the comparison of the one or more search indicator values with the one or more sets of database indicator values, cause the transmission of at least one of the one or more database values.

9. The apparatus of Claim 8, wherein the at least one memory and computer program code are further configured to, with the processor, cause the apparatus to generate a digest for at least one of the one or more database values based on the salt value input.

10. The apparatus of Claim 9, wherein each database indicator value of the set of database indicator values comprises a digest of the database value inputted into a minhash function with the same salt value input.

11. The apparatus of Claim 10, wherein the digest of the one or more characters is based on the minhash function being performed on one or more hash windows of the one or more characters of the search query.

12. The apparatus of Claim 11, wherein the comparing the set of search indicator values with one or more sets of database indicator values comprises comparing search indicator values and database indicators values that were digests of the same minhash function.

13. The apparatus of Claim 8, wherein the at least one memory and computer program code are further configured to, with the processor, cause the apparatus to:
receive a request for the salt value input used with the minhash function; and
cause the transmission of the salt value input used with the minhash function.

14. A system for answering fuzzy search queries, the system comprising one or more servers, each server comprising at least one processor and at least one non-transitory memory including computer program code instructions, the computer program code instructions configured to, when executed, cause the server to:
receive a search indicator value based on one or more characters of a search query, wherein the search indicator value comprises a digest of the one or more characters of a search query inputted into a minhash function with a salt value input;
compare the search indicator value with a set of database indicator values, wherein the database indicator value in the set of database indicator values corresponds to a database value; and
based on the comparison of the search indicator value with the set of database indicator values, cause the transmission of at least one of the one or more database values.

15. The system of Claim 14, wherein the set of database value indicators of each server comprises a set of digests of the database values inputted into a distinct minhash function with a different salt value input from the other servers.
